# EUROPÄISCHE PATENTSCHRIFT

(11) **EP 1 589 823 B1**
(45) Veröffentlichungstag und Bekanntmachung des Hinweises auf die Patenterteilung: **08.07.2009**
(21) Anmeldenummer: 03785562.4
(22) Anmeldetag: 12.12.2003
(51) Int. Cl.: A23G 1/20, A23G 1/21, A23G 1/00, A23G 3/02, A23G 3/00

(54) **HERSTELLUNG SCHALENARTIGER VERZEHRGÜTER AUS EINER KAKAOHALTIGEN ODER SCHOKOLADE ÄHNLICHEN FETTMASSE**
PRODUCTION OF CONSUMABLE SHELL-SHAPED ARTICLES FROM A FATTY MATERIAL CONTAINING CACAO OR A CHOCOLATE-TYPE SUBSTANCE
PRODUCTION D'ARTICLES CONSOMMABLES EN FORME DE COQUILLE A PARTIR D'UNE MASSE DE MATIERE GRASSE CONTENANT DU CACAO OU DE TYPE CHOCOLAT

(30) Priorität: 04.02.2003 DE 10304525
(43) Veröffentlichungstag der Anmeldung: 02.11.2005
(73) Patentinhaber: Bühler Bindler GmbH, 51702 Bergneustadt (DE)
(72) Erfinder: STEINER, Uwe, 51588 Nümbrecht (DE)
(74) Vertreter: Wilming, Martin
(86) Internationale Anmeldenummer: PCT/DE2003/004104
(87) Internationale Veröffentlichungsnummer: WO 2004/068963

(56) Entgegenhaltungen:
- EP-A- 0 945 069
- WO-A-95/32633
- WO-A-97/49296
- DE-A- 10 252 633
- US-A- 3 045 284

## Beschreibung

Die Erfindung bezieht sich auf eine Vorrichtung und ein Verfahren zur Herstellung eines schalenartig geformten Verzehrgutes aus einer Fettmasse, insbesondere einer kakaohaltigen oder schokoladeartigen Fettmasse, gemäss dem Oberbegriff von Anspruch 1 bzw. gemäss dem Oberbegriff von Anspruch 22.

Derartige Vorrichtungen bzw. Verfahren, die auch mit dem Begriff "Kaltstempeln" bezeichnet werden, wenn ein gekühlter Stempel verwendet wird, sind an sich bekannt.

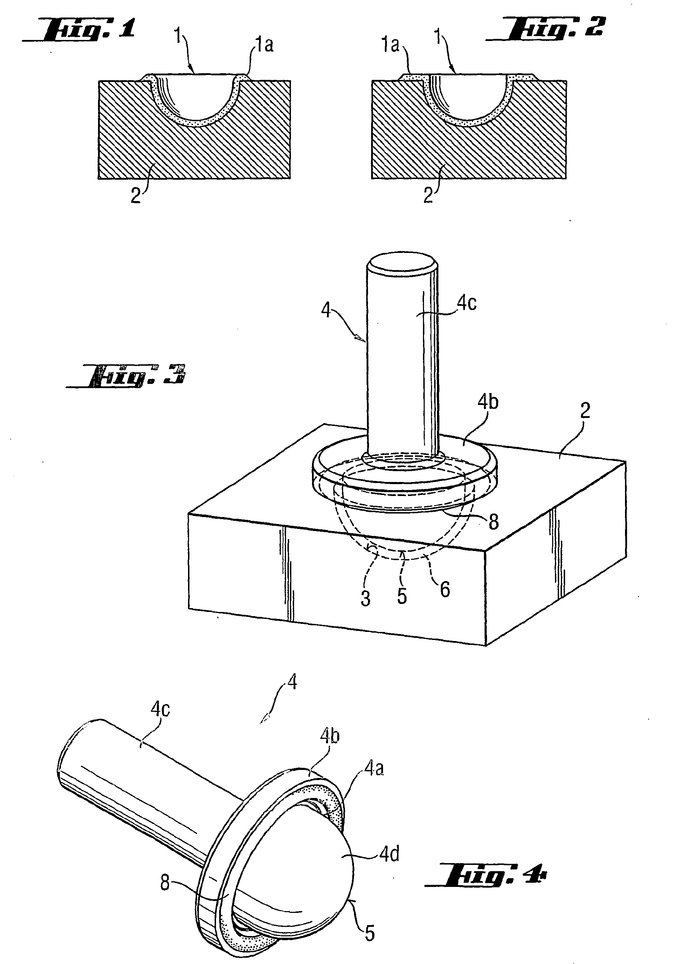

In der Regel wird mit einem Masseüberschuss gearbeitet, der beim Absenken des Stempels in die mit Masse gefüllte Alveole zwischen dem Stempel-Randbereich und dem Alveolen-Randbereich herausquillt. Dadurch entsteht am Rand der durch dieses "Stempeln" gebildeten Schale bzw. Hülse aus Fettmasse ein Wulst nicht-definierter Form (siehe Fig. 1), dessen Volumen und Verteilung entlang des Schalenrandes in der Regel von Schale zu Schale unterschiedlich ist, da ein völlig identisches Volumen des Formhohlraums zwischen Stempel und Alveole, eine perfekte Zentrierung des Stempels innerhalb der Alveole und eine völlig identische Dosiermenge der in die Alveole dosierten Masse praktisch unmöglich sind. Auf diese Weise können zwar in der Masse enthaltene gasförmige Substanzen, insbesondere Lufteinschlüsse, durch den noch flüssigen Wulst entweichen, doch wird dies mit dem Nachteil erkauft, dass nach dem Vorkühlen der Schalen ein weiterer Schritt zur Bearbeitung des Randwulstes z.B. durch Schneiden erforderlich ist, wodurch einerseits der Schalenrand einer starken mechanischen Beanspruchung ausgesetzt wird und andererseits weitere Schritte zur erneuten Aufschmelzung des abgeschnittenen Masseüberschusses und seiner Rückführung in den Prozess erforderlich sind.

Es ist auch bekannt, ohne Masseüberschuss zu arbeiten. In diesem Fall wird die gesamte Dosiermenge der in die Alveole dosierten Masse verarbeitet und entspricht dem Endgewicht der fertigen Schale bzw. Hülse. Ein Herausquellen von Masse wird dabei verhindert, indem man den Alveolen-Randbereich mittels einer Abdichtplatte bzw. eines Abdichtrings abdichtet, die bzw. der den Stempel umgibt und mit einer Federkraft gegen den Alveolenrand gedrückt wird ("Federbeaufschlagung"), so dass ein vollständig abgeschlossenes Formvolumen gebildet wird. Der Stempel ist über ein abdichtendes Gleitlager relativ zur Abdichtplatte beweglich. Beim "Stempeln" bewegt sich somit der Stempel relativ zur Abdichtplatte und verdrängt während seiner Absenkbewegung ("Einfahren") die zuvor in die Alveole eindosierte Masse, die sich in dem nun völlig geschlossenen Formhohlraum ausbreitet und diesen vollständig ausfüllt. Toleranzen der Dosiermenge werden durch unterschiedliche Eintauchtiefen des Stempels ausgeglichen. Dabei kann z.B. gemäss der EP0756455 die Abdichtplatte bzw. der Abdichtring eine spezielle Innenkontur aufweisen, um einen Schalenrand spezieller Kontur zu erhalten (siehe Fig. 2). Dieses Arbeiten mit völlig geschlossenem Formhohlraum und dessen vollständiges Füllen beim Stempeln ermöglicht zwar das Arbeiten ohne Masseüberschuss, jedoch ist das Entweichen in der Masse enthaltener gasförmiger Einschlüsse, insbesondere Lufteinschlüsse, nun nicht mehr möglich. Diese Gaseinschlüsse können beim Anheben des Stempels nach der Fertigung der Schale bzw. Hülse dazu führen, dass diese zerstört wird. Ausserdem ist ein derartiges mechanisches System mit abdichtendem Gleitlager an sich schon recht aufwendig. Um aber bei den beim "Kaltstempeln" vorherrschenden Einsatzbedingungen (Temperatur des Stempels beim Eintauchen kleiner als 0°C, Temperatur der Fettmasse beim Eintauchen grösser als +30°C, Materialausdehnungen) ein einwandfreies Funktionieren einer derartigen Kaltstempelanlage (Reibung im Gleitlager, Dichtwirkung des Gleitlagers) zu gewährleisten, ist jedoch noch zusätzlicher technischer Aufwand notwendig. Selbst wenn das abdichtende Gleitlager unter grossem technischem Aufwand problemlos funktioniert, besteht nach wie vor die Gefahr von Gaseinschlüssen, ggf.. mit Druckaufbau, so dass die geformten Schalen bei der anschliessenden Anhebbewegung des Stempels ("Ausfahren") aufplatzen können.

Die WO 97/49296 beschreibt eine Vorrichtung zur Herstellung schalenartiger Artikel aus einer Giessmasse mit einem Stempel aus einem flexiblen Material, wie z.B. aus elastischem Polymer, einem Gummi, einem Silikon-Gummi o.dgl. Der ebenfalls flexible Randbereich dieses Stempels ermöglicht das elastische Abdichten eines Formhohlraumes, der sich zwischen einer Hohlform (Alveole) und dem in diese Hohlform abgesenktem Stempel ergibt. Das Ausbilden eines Druckpolsters (Gaspolster, Gaspuffer) zwischen dem oberen Rand der Giessmasse in dem Formhohlraum und dem abdichtenden flexiblen Randbereich des Stempels wird aber dadurch verhindert, dass Entlüftungskanäle im Randbereich des Stempels ausgebildet sind.

Der Erfindung liegt die Aufgabe zugrunde, bei einer Vorrichtung und einem Verfahren der eingangs genannten Art die Probleme der ungleichmässigen Randausbildung und des Nichtentweichens von Gaseinschlüssen während des Stempelvorgangs zu vermeiden.

Diese Aufgabe wird durch die Vorrichtung gemäss Anspruch 1 und durch das Verfahren gemäss Anspruch 22 gelöst.

Die erfindungsgemässe Vorrichtung umfasst eine Alveole, deren Innenfläche die Aussenfläche des herzustellenden schalenartigen Verzehrgutes bestimmt, ein Dosiermittel zum Befüllen der Alveole mit der Fettmasse im fliessfähigen temperierten Zustand, einen in die Alveole absenkbaren kühlbaren Stempel, dessen Aussenfläche die Innenfläche des herzustellenden schalenartigen Verzehrgutes bestimmt, sowie ein Absenkmittel zum Absenken des Stempels in die Alveole, wobei bei in die Alveole abgesenktem Stempel ein Stempel-Randbereich des Stempels und ein Alveolen-Randbereich der Alveole derart aneinander liegen, dass der Stempel und die Alveole einen schalenartigen Formhohlraum bestimmen, der durch die Stempel-Aussenfläche und durch die Alveolen-Innenfläche begrenzt ist. Erfindungsgemäss weist nun der Alveolen-Randbereich und/oder der Stempel-Randbereich ein elastisch verformbares Dichtungsmittel auf, welches den Formhohlraum nach aussen abdichtet, wenn es bei in die Alveole abgesenktem Stempel gegen den Stempel-Randbereich bzw. gegen den Alveolen-Randbereich gedrückt wird. Das Dichtungsmittel ist als O-Ring oder als verformbarer Hohlkörper aus gummielastischem Material ausgebildet.

Die Alveole kann insbesondere vibrierbar sein.

Aufgrund der Verformbarkeit des Dichtungsmittels kann die beim Absenken des Stempels sich zunächst im Formhohlraum verteilende und gegen Ende der Absenkbewegung den Randbereich des Formhohlraums erreichende und zunehmend druckbeaufschlagte Masse dieses verformbare Dichtungsmittel verformen. Somit macht sich der Teil der Masse, der beim eingangs beschriebenen Stand der Technik aus dem Formhohlraum ins Freie herausquoll, hier erfindungsgemäss im Bereich des Dichtungsmittels Platz, das dabei verformt wird. Trotzt dieser Verformung durch die unter Druck stehende Masse behält das Dichtungsmittel aber seine abdichtende Funktion bei und trägt damit zu einer gleichmässigeren Verteilung der Masse im Randbereich der so gebildeten Schale bei. Zumindest ein Teil möglicherweise vorhandener Gaseinschlüsse in der Masse können so schon während der Verdrängung und Verteilung der Masse beim Absenken des Stempels in den Bereich zwischen der Oberfläche des sich bildenden Schalenrands und der sich verformenden Oberfläche des Dichtungsmittels gelangen. Auch dieser "Gaspuffer" bzw. dieses "Gaspolster" zwischen dem Schalenrand und dem verformbaren Dichtungsmittel begünstigt eine Vergleichmässigung der Verteilung der Masse im Randbereich der gebildeten Schale. Das Gasvolumen wirkt somit als Gegenpolster zur Regulierung der Randausbildung unter Vermeidung eines Masseübertritts auf die Formenoberfläche ausserhalb des Formhohlraumes. Ausserdem können Systemtoleranzen bei den zahlreichen Alveolen einer Alveolenplatte und den ihnen zugeordneten zahlreichen Stempeln einer Stempelplatte sowie bei der jeweiligen Dosierung kompensiert werden.

Die elastische Verformbarkeit des Dichtungsmittels begünstigt zusätzlich die Vergleichmässigung des sich bildenden Schalenrandes.

Das Dichtungsmittel kann sich zumindest in Teilbereichen des Alveolen-Randbereichs bzw. des Stempel-Randbereichs entlang der Umfangsrichtung der Alveolenöffnung bzw. des Stempelumfangs erstrecken. Vorzugsweise erstreckt es sich aber ringartig entlang des gesamten Umfangs des Alveolen-Randbereichs bzw. des Stempel-Randbereichs. Somit wird eine Vergleichmässigung der Masse entlang des gesamten Randbereichs der gebildeten Schalen erzielt.

Zweckmässigerweise ist der Stempel-Randbereich eine bei vollständig abgesenktem Stempel auf dem Alveolen-Randbereich anliegende Auflagefläche einer flanschartigen Erweiterung des Stempels.

Die Verbindung zwischen dem Stempel-Randbereich und dem Dichtungsmittel bzw. zwischen dem Alveolen-Randbereich und dem Dichtungsmittel kann als kraftschlüssige und/oder eine formschlüssige Verbindung ausgebildet sein.

Dabei kann das Dichtungsmittel als torusartiger Hohlkörper ausgebildet sein.

Bei einer weiteren vorteilhaften Ausgestaltung ist der verformbare Hohlkörper des Dichtungsmittels mit einem Fluid gefüllt. Das Zusammenwirken der Verformbarkeit des Hohlkörpers mit dem in ihm enthaltenen Fluid bewirkt beim Stempeln besonders vorteilhaft die Vergleichmässigung der Masse im Randbereich der gebildeten Schale. Der Hohlkörper kann über mindestens eine Fluidleitung mit einer Fluidquelle in Fluidverbindung stehen. Dies ermöglicht eine Regulierung der in dem Hohlkörper enthaltenen Fluidmenge und somit des Fluiddrucks, so dass der Hohlkörper mehr oder weniger "prall" mit Fluid gefüllt ist. Als Fluid kann dabei ein inkompressibles Fluid, insbesondere eine Flüssigkeit wie Wasser oder Öl, oder aber ein kompressibles Fluid, insbesondere ein Gas wie Luft, verwendet werden.

Das Fluid in dem Hohlkörper kann aber auch ein Wärmeträgerfluid aufweisen. Dadurch kann die Temperatur des Hohlkörper-Materials und damit die Temperatur der den Randbereich der Schale bildenden Masse gegen Ende der Absenkbewegung des Stempels beeinflusst werden, um z.B. das Fliessverhalten oder das Erstarrungsverhalten der Masse im Randbereich der Schale zu beeinflussen. Wenn das Fluid in dem Hohlkörper sowohl ein kompressibles Fluid als auch ein inkompressibles Fluid enthält, können einerseits eine optimale Zufuhr oder Abfuhr von Wärme im Schalen-Randbereich und andererseits ein optimales elastisches Verhalten des Hohlkörper-Dichtungsmittels erzielt werden.

Zweckmässigerweise ist das Dichtungsmittel in einem nutartigen Sitz des Alveolen-Randbereichs bzw. des Stempel-Randbereichs überstehend eingesetzt, wobei eine formschlüssige oder kraftschlüssige Verbindung, z.B. durch Kleben oder im Falle eines elastischen Dichtungsmittel insbesondere durch Einpressen in die Nut, in Frage kommen.

Der Alveolen-Randbereich und/oder der Stempel-Randbereich können auch nutartige oder rillenartige Ausnehmungen aufweisen, die mit einer Druckgasquelle in Fluidverbindung stehen. Zweckmässigerweise weisen auch hier zumindest Teilbereiche entlang der Umfangsrichtung des Alveolen-Randbereichs und/oder des Stempel-Randbereichs nutartige oder rillenartige Ausnehmungen auf. Vorzugsweise sind aber auch hier entlang des gesamten Umfangs des Alveolen-Randbereichs und/oder des Stempel-Randbereichs nutartige oder rillenartige Ausnehmungen vorgesehen, wodurch ähnlich wie im vorhergehenden Absatz auch hier eine durchgehende ringartige Abdichtung im gesamten Randbereich gewährleistet wird.

Um einerseits eine möglichst gleichmässige Verteilung der Temperatur auf dem Stempel und in der Alveole und andererseits ein schnelles Abführen oder Zuführen von Wärme an der sich bildenden Schale zu gewährleisten, bestehen der Stempel und/oder die Alveole aus einem gut wärmeleitenden Material.

Zweckmässigerweise sind der Stempel und/oder die Alveole von Kanälen durchzogen, die mit einer Wärmeträgerfluidquelle in Fluidverbindung stehen, wobei die Wärmeträgerfluidquelle insbesondere eine Kühlfluidquelle ist.

Vorzugsweise weisen der Alveolen-Randbereich und/oder der Stempel-Randbereich starre Erhöhungen auf, die als Abstandshalter dafür sorgen, dass beim Stempeln am unteren Ende des Stempelhubes eine maximale Kompression des Dichtungsmittels nicht überschritten wird.

Das Dichtungsmittel kann als Dichtungsbarriere zwischen dem Formhohlraum und der äusseren Umgebung der Vorrichtung ausgebildet sein. Die Dichtungsbarriere kann dabei so ausgelegt sein, dass eine Verformung des Dichtungsmittels bei Überschreitung eines auf das Dichtungsmittel einwirkenden "Verformungs-Minimaldrucks" einsetzt und ggf.. eine Überwindung der Dichtungsbarriere des Dichtungsmittels bei Überschreitung eines auf das Dichtungsmittel einwirkenden "Überwindungs-Minimaldrucks" einsetzt. Beim Stempeln wird dadurch am Ende der Absenkbewegung des Stempels ermöglicht, dass die während der Verteilung der Masse im Formhohlraum aus der Masse ausgetretenen Gase sich zwischen dem sich bildenden Schalenrand sammeln und ggf.. unter Mitwirkung des sich elastisch verhaltenden Dichtungsmittels zu der weiter oben beschriebenen Vergleichmässigung des Schalenrandes beitragen. Der Verformungs-Minimaldruck des Dichtungsmittels ist dabei so eingestellt, dass eine Verformung ("Nachgeben") der Dichtungsbarriere schon einzusetzen beginnt, bevor der Stempel seine untere Endstellung erreicht und noch bevor die aus der Masse austretenden Gase ihre maximale Kompression bzw. ihren maximalen Druck erreichen. Der Überwindungs-Minimaldruck des Dichtungsmittels ist grösser als der Verformungs-Minimaldruck und ist so eingestellt, dass eine Überwindung ("Offnen") der Dichtungsbarriere erst kurzzeitig nach ihrer Verformung erreicht wird, wenn der Stempel seine untere Endstellung erreicht hat oder kurz davor und wenn die gesamte aus der Masse ausgetretene Gasmenge durch weitere Kompression eine weitere Drucksteigerung bis zum Überwindungs-Minimaldruck erreicht hat. Dadurch wird ermöglicht, dass sich die Masse beruhigt bzw. dass sie erstarrt, bevor sich die die Dichtungsbarriere ggf. öffnet. So wird verhindert, dass beim Ablassen von Gas ein Teil der Masse des Schalenrandbereichs durch das austretende Gas herausgeschleudert wird. Dieses Entgasen des Formhohlraumes vor dem Anheben des Stempels nach vollendeter Schalenherstellung verringert auch die Gefahr einer Schädigung (Aufplatzen) der Schalen, da diese während des Entgasungsvorgangs durch den Stempel stabilisiert sind.

Das erfindungsgemässe Verfahren weist die folgenden Schritte auf: dosiertes Befüllen einer die Aussenfläche des schalenartigen Verzehrgutes bestimmenden Alveole mit der Fettmasse im fliessfähigen temperierten Zustand; Eintauchen eines die Innenfläche des schalenartigen Verzehrgutes bestimmenden, gekühlten Stempels in die fliessfähige temperierte Fettmasse in der Alveole, so dass sich die noch fliessfähige Fettmasse in dem die Form und das Soll-Volumen (= Volumen bei maximaler Eindringtiefe und unverformtem Dichtungsmittel) des Verzehrgutes bestimmenden Zwischenraum zwischen Alveole und Stempel verteilt; und Halten des Stempels in seiner in der Fettmasse eingetauchten Stellung über eine bestimmte Zeitdauer, bis die Fettmasse in dem Zwischenraum erstarrt ist.

Erfindungsgemäss wird beim Eintauchen des Stempels in die fliessfähige temperierte Fettmasse in der Alveole ein Druckpolster im Alveolen-Randbereich und/oder im Stempel-Randbereich erzeugt.

Da der Stempel gekühlt wird ("Kaltstempeln"), verringert dies die für die Schritte des erfindungsgemässen Verfahrens benötigte Gesamtzeit und ermöglicht somit eine Steigerung der Taktfrequenz bei der Herstellung der Schalen.

Das Eintauchen des Stempels in die Fettmasse kann auf verschiedene Weisen gesteuert werden, und zwar z.B. mit einem vorgegebenen zeitlichen Verlauf der Stempelkraft bzw. des Stempeldrucks in der Fettmasse im Zwischenraum oder mit einem vorgegebenen zeitlichen Verlauf der Geschwindigkeit des Stempels in der Fettmasse im Zwischenraum oder mit einem vorgegebenen Verlauf der Stempelkraft bzw. des Stempeldrucks in Abhängigkeit von der Eindringtiefe des Stempels in der Fettmasse im Zwischenraum. Dieses gesteuerte Eintauchen des Stempels trägt zur Reproduzierbarkeit der Schalenbildung bei.

Alternativ kann das Eintauchen des Stempels in die Fettmasse auf verschiedene Weisen geregelt werden. So können z.B. während des Eintauchens des Stempels in die Fettmasse der Verlauf der Stempelkraft bzw. des Stempeldrucks oder die Geschwindigkeit des Stempels geregelt werden.

Das Befüllen der Alveole mit Fettmasse kann mit einem geringen Fettmasse-Überschuss gegenüber dem Soll-Volumen erfolgen. Dadurch wird gewährleistet, dass für die zu bildende Schale trotz der stets vorhandenen Systemtoleranzen immer ausreichend viel Masse zur Verfügung steht. Der aufgrund der genannten Systemtoleranzen mehr oder weniger grosse Masseüberschuss wird dabei durch das erfindungsgemässe Dichtungsmittel zu einem gleichmässigen Schalenrand verteilt.

Der eindosierte Fettmasse-Überschuss ist vorzugsweise grösser als die Dosiermengen-Toleranz des Soll-Volumens.

Zweckmässigerweise wird die in die Alveole eindosierte Masse zwischen dem Eindosieren und dem Absenken des Stempels vorzugsweise durch Vibrieren der Alveole vibriert. Dieses Vibrieren der noch flüssigen Masse fördert das Entweichen von Gaseinschlüssen wie Luft aus der Masse.

Das erfindungsgemässe Verfahren kann auch so durchgeführt werden, dass der beim Eintauchen des Stempels in der fliessfähigen Fettmasse herrschende Stempeldruck (Stempelkraft dividiert durch Stempelquerschnitt) zumindest am Ende der Eintauchbewegung des Stempels grösser als der zur Verformung des Dichtungsmittels notwendige Verformungs-Minimaldruck und kleiner als der zur Überwindung der Dichtungsbarriere notwendige Überwindungs-Minimaldruck ist. Dies ermöglicht es, die Stempeltemperatur bzw. Stempelkühlung sowie die Absenkzeit des Stempels so einzustellen, dass der sich bildende Schalenrand noch nicht erstarrt ist, wenn die untere Stempelstellung erreicht ist, wodurch die Vergleichmässigung des Schalenrandes durch das Gaspolster begünstigt wird.

Vorzugsweise wird während des Eintauchens des Stempels der Fluiddruck im Innern des Dichtungs-Hohlkörpers zeitlich verändert. So kann z.B. der Fluiddruck innerhalb des Dichtungs-Hohlkörpers an den Stempeldruck gekoppelt werden, indem z.B. die Druckbeaufschlagung der Fluidquelle bzw. der Gasquelle durch dieselbe Kraftquelle erfolgt, die auch den Stempel beaufschlagt. Auf diese Weise wird gewährleistet, dass der Druck des Dichtungs-Hohlkörpers genau dann hoch ist, wenn auch der Stempeldruck hoch ist, wodurch eine sichere Abdichtung des Formhohlraums während des gesamen Stempelns gewährleistet wird (Überwindungs-Minimaldruck stets grösser als Stempeldruck).

Vorzugsweise wird im Verlaufe des Eintauchens des Stempels in die fliessfähige temperierte Fettmasse in der Alveole die Stempelkraft bzw. der Stempeldruck in der Fettmasse im Zwischenraum zunehmend erhöht.

Stattdessen oder zusätzlich kann im Verlaufe des Eintauchens des Stempels in die fliessfähige temperierte Fettmasse in der Alveole die Stempelkraft bzw. der Stempeldruck in der Fettmasse im Zwischenraum einen oszillierenden zeitlichen Verlauf aufweisen. Dies begünstigt ebenfalls das Austreiben von Gaseinschlüssen.

Nicht nur der Stempel und/oder die Alveole können mit einem Kühlfluid gekühlt werden, sondern auch das Dichtungsmittel kann mittels eines Kühlfluids gekühlt oder mittels eines Heizfluids geheizt werden. Durch die Beheizung des Dichtungsmittels kann z.B. der Randbereich länger flüssig oder zumindest in einem ausreichend weichen Zustand gehalten werden oder ggf.. erneut verflüssigt oder aufgeweicht werden, nachdem sich die Schale verfestigt hat, so dass die Vergleichmässigung des Schalenrandes durch das Dichtungsmittel ermöglicht oder zumindest erleichtert wird.

Es ist auch vorteilhaft, wenn zumindest gegen Ende des Eintauchens des Stempels der Fluiddruck im Innern des Dichtungs-Hohlkörpers oszilliert wird. Dieses Oszillieren des Dichtungsmittel-Gegendrucks wirkt sich ebenfalls positiv auf die Vergleichmässigung des Schalenrandes aus.

Weitere Vorteile, Merkmale und Anwendungsmöglichkeiten der Erfindung ergeben sich aus der nun folgenden Beschreibung nicht einschränkend aufzufassender Ausführungsbeispiele der erfindungsgemässen Vorrichtung zur Durchführung des erfindungsgemässen Verfahrens, wobei:
- Fig. 1: eine Schnittansicht einer gemäss dem Stand der Technik gefertigten Schale bzw. Hülse zeigt;
- Fig. 2: eine Schnittansicht einer weiteren gemäss dem Stand der Technik gefertigten Schale bzw. Hülse zeigt;
- Fig. 3: eine Perspektivansicht eines Stempel/Alveolen-Paares der erfindungsgemässen Vorrichtung schematisch ist;
- Fig. 4: eine Perspektivansicht des Stempels des Stempel/Alveolen-Paares von Fig. 3 ist;
- Fig. 5: eine Seitenansicht einer ersten Ausführung eines Stempel/Alveolen-Paares der erfindungsgemässen Vorrichtung schematisch zeigt;
- Fig. 6: eine Schnittansicht dieser ersten Ausführung entlang der Ebene A-A der Fig. 5 schematisch zeigt;
- Fig. 7: ein vergrösserter Ausschnitt aus der Schnittansicht der Fig. 6 ist;
- Fig. 8: ein nochmals vergrösserter Ausschnitt aus dem eingekreisten Bereich der Fig. 6 oder Fig. 7 ist;
- Fig. 9: eine Seitenansicht einer zweiten Ausführung eines Stempel/Alveolen-Paares der erfindungsgemässen Vorrichtung schematisch zeigt;
- Fig. 10: eine Schnittansicht dieser zweiten Ausführung entlang der Ebene A-A der Fig. 9 schematisch zeigt;
- Fig. 11: ein vergrösserter Ausschnitt aus der Schnittansicht der Fig. 10 ist;
- Fig. 12: ein nochmals vergrösserter Ausschnitt aus dem eingekreisten Bereich der Fig. 10 oder Fig. 11 ist;
- Fig. 13: eine der Fig. 12 entsprechende Schnittansicht der ersten Ausführung mit einem massiven Dichtungsmittel im Betrieb am unteren Ende des Stempelhubes ist;
- Fig. 14: eine der Fig. 12 entsprechende Schnittansicht einer dritten Ausführung mit einem hohlen Dichtungsmittel im Betrieb am unteren Ende des Stempelhubes ist;
- Fig. 15: eine der Fig. 12 entsprechende Schnittansicht einer vierten Ausführung mit einem massiven Dichtungsmittel im Betrieb am unteren Ende des Stempelhubes ist;
- Fig. 16: eine der Fig. 12 entsprechende Schnittansicht einer fünften Ausführung mit einem hohlen Dichtungsmittel im Betrieb am unteren Ende des Stempelhubes ist; und
- Fig. 17: eine der Fig. 12 entsprechende Schnittansicht in einer sechsten Ausführung mit einem Mittel zur Erzeugung eines Gaspolsters.

Gemäss dem Stand der Technik hergestellte Schalen bzw. Hülsen aus Schokolade sind in den Figuren 1 und 2 als schematische Schnittansicht dargestellt.

Wenn in der folgenden Beschreibung von Schokoladenmasse anstatt von Fettmasse die Rede ist, so ist dies lediglich als Beispiel einer Fettmasse, und zwar als Fettmasse mit suspendierten Kakao- und Zuckerteilchen aufzufassen.

Fig. 1 zeigt eine durch Kaltstempeln gemäss dem Stand der Technik hergestellte Schokoladenhülse 1, die in einer Alveole 2 sitzt. Die hier abgebildete Hülse 1 wurde durch Kaltstempeln mit Masseüberschuss und mit einem in seinem Randbereich offenen Formhohlraum hergestellt, wodurch ein wulstartiger Hülsenrand 1 a entstand, der den Rand der Alveole 2 bedeckt. Wegen der eingangs erwähnten stets vorhandenen Systemtoleranzen ist es auf diese Weise praktisch unmöglich, einen entlang der Umfangsrichtung der Hülse 1 gleichmässigen Hülsenrand 1 a zu erzielen.

Fig. 2 zeigt eine weitere, ebenfalls durch Kaltstempeln gemäss dem Stand der Technik hergestellte Schokoladenhülse 1, die ebenfalls in einer Alveole 2 sitzt. In diesem Fall kann die Hülse 1 im wesentlichen durch zwei unterschiedliche Verfahren hergestellt werden. Entweder erfolgt die Hülsenbildung dabei durch Kaltstempeln mit Masseüberschuss wie bei Fig. 1, aber mit zusätzlicher anschliessender Randbearbeitung z.B. durch Schneiden, oder die Hülsenbildung erfolgt durch Kaltstempeln ohne Masseüberschuss in einem völlig geschlossenen Formhohlraum, der beim Stempeln vollständig mit Schokoladenmasse gefüllt wird, wobei der Formhohlraum in seinem Randbereich eine vorgegebene, zum angestrebten definierten Hülsenrand 1 a komplementäre Kontur haben muss. Man muss daher entweder einen zusätzlichen Schritt zur Bearbeitung des Hülsenrandes 1a in Kauf nehmen, oder man läuft Gefahr, dass die soeben durch Kaltstempeln gebildete Hülse 1 beim Anheben des Stempels beschädigt wird, da ggf.. in der Hülse enthaltene Gaseinschlüsse während des Stempelns nicht entweichen konnten.

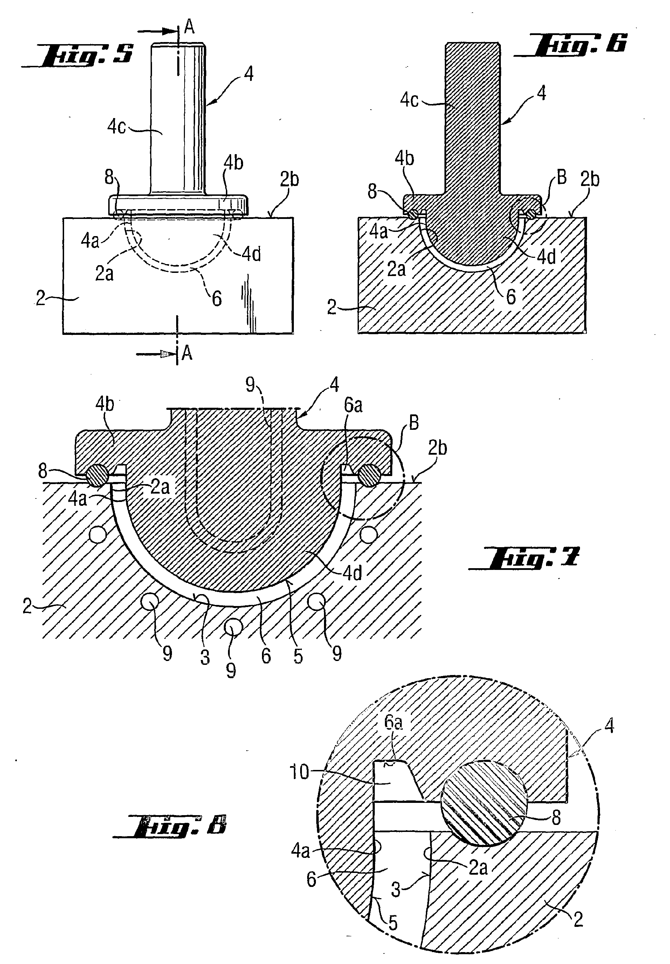

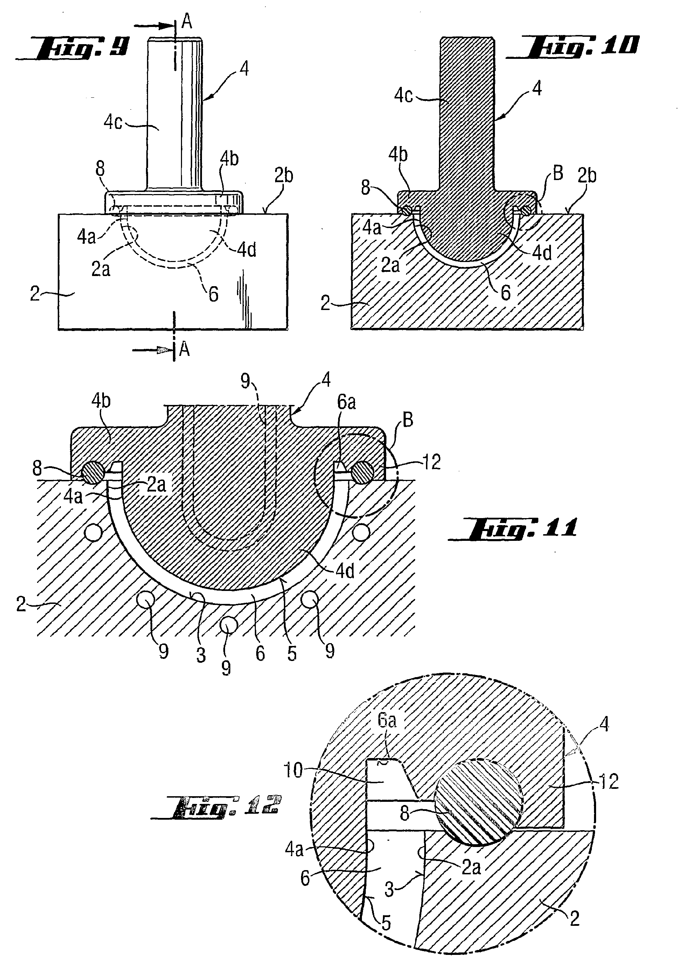

Fig. 3 ist eine Perspektivansicht eines Stempel/Alveolen-Paares gemäss der Erfindung. Der Stempel 4 ragt in eine Alveole 2, so dass zwischen dem Stempel 4 und der Alveole 2 ein Formhohlraum 6 bestimmt wird (siehe auch Fig. 7, Fig. 11). Der Stempel 4 besitzt einen Flansch 4b, in dem ein torusförmiges Dichtungsmittel (O-Ring) 8 kraft- und/oder formschlüssig eingesetzt ist und mit dem der Flansch 4b auf dem Rand der Alveole 2 aufliegt. Das torusförmige Dichtungsmittel 8, das z.B. aus einem gummielastischen Material besteht, hat daher die Funktion eines verformbaren Abstandshalters zur Bestimmung des Volumens des Formhohlraums zwischen der Stempelfläche und der Alveolenfläche und schliesst somit den zwischen dem Stempel 4 und der Alveole 2 gebildeten Formhohlraum 6 nach aussen hin ab.

Fig. 4 ist eine Perspektivansicht des Stempels 4 des Stempel/Alveolen-Paares der Fig. 3. Der Stempel 4 besitzt einen Stempelschaft 4c, durch den über (nicht gezeigte) Kanäle z.B. ein Kühlmittel in dem in die Alveole 2 absenkbaren Stempelkopf 4d zirkuliert werden kann. Das als O-Ring ausgebildete Dichtungsmittel) 8 sitzt in der zur Alveole weisenden Fläche des Flansches 4b.

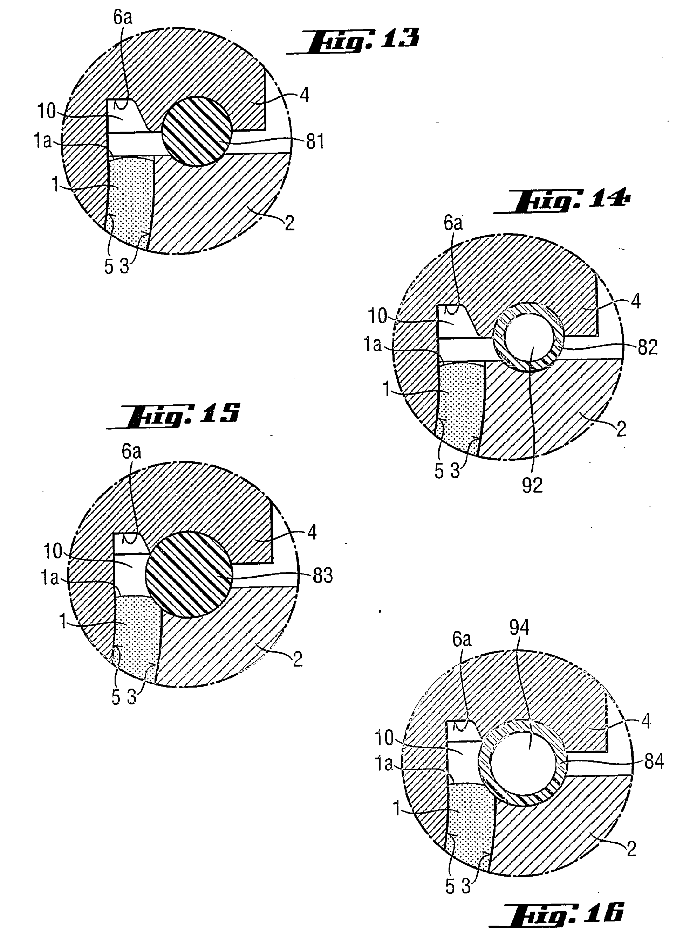

Fig. 5 ist eine Seitenansicht einer ersten Ausführung eines Stempel/Alveolen-Paares der erfindungsgemässen Vorrichtung mit maximal in die Alveole 2 abgesenktem Stempel 4. Der Stempelschaft 4c ragt nach oben, während der Stempelkopf 4d in die Alveole 2 ragt. Zwischen der Alveole 2 und dem in sie ragenden Stempel 4 ist der ( gestrichelt angedeutete) Formhohlraum 6 ausgebildet, dessen genaue geometrische Form durch die Form des Stempelkopfes 4d und der Alveole 2 bestimmt ist und in dem die Schokoladenhülsen 1 geformt werden. Der Stempel 4 liegt über das in seinem Flansch 4b kraft- und/oder formschlüssig sitzende Dichtungsmittel 8 auf der oberen Alveolenfläche 2b auf. Das Dichtungsmittel 8 dient somit als ein den Formhohlraum 6 nach aussen abschliessender und sein Volumen bestimmender Abstandshalter zwischen Stempel 4 und Alveole 2. Im Betrieb wird die temperierte flüssige Schokoladenmasse 1 (siehe Fig. 13, 14, 15, 16) zunächst in die Alveole 2 gefüllt, woraufhin der gekühlte Stempel 4 in die Alveole 2 abgesenkt wird. Dabei wird die Schokoladenmasse 1 in dem Formhohlraum 6 verteilt sowie gleichzeitig abgekühlt und gelangt bis in den oberen Randbereich des Formhohlraums 6, genauer gesagt bis zu dem Alveolen-Randbereich 2a und dem Stempel-Randbereich 4a des Stempel/Alveolen-Paares, um schliesslich zu erstarren und die gewünschte Schokoladenhülse 1 zu bilden.

Fig. 6 ist eine Schnittansicht der in Fig. 5 gezeigten ersten Ausführung entlang der Schnittebene A-A. Man erkennt den zwischen dem Stempelkopf 4d und der Alveole 2 gebildeten Formhohlraum 6. Durch den gestrichelten Kreis ist der Randbereich B des Stempel/Alveolen-Paares angedeutet, in dem sich der Alveolen-Randbereich 2a, der Stempel-Randbereich 4a und der Hülsen-Randbereich 1a (siehe Fig. 13-16) befinden.

Fig. 7 zeigt den unteren Teil der in Fig. 6 gezeigten Schnittansicht in vergrösserter Darstellung. Man erkennt deutlich, dass der Formhohlraum 6 durch die Innenfläche 3 der Alveole 2 und durch die Aussenfläche 5 des Stempels 4 bestimmt ist. Ausserdem erkennt man in dem oberen, sich um den Umfang des Stempelkopfes 4d erstreckenden Randbereich B eine rillenartige bzw. nutartige Ausnehmung 6a in der zur Alveole 2 weisenden Fläche des Flansches 4b des Stempels 4. Diese Umfangsnut 6a bildet den obersten Teil des Formhohlraums 6. Da die Abdichtung des Randbereichs B des Formhohlraums 6 beim Absenken des Stempels 4 durch das Dichtungsmittel 8 erst dann erfolgt, wenn der Stempel seine tiefste Stellung erreicht hat oder allenfalls kurz davor ("spät abdichtende Randdichtung"), können die in der flüssigen Schokoladenmasse 1 möglicherweise vorhandenen Gaseinschlüsse zu einem grossen Teil noch während der Verdrängungsphase der Schokoladenmasse 1 entweichen. Lediglich die ganz zum Schluss der Absenkbewegung des Stempels 4, d.h. nach dem Abdichten durch das Dichtungsmittel 8, noch austretenden Gaseinschlüsse können den Formhohlraum 6 nicht mehr verlassen und gelangen als bei der letzten Phase der Verdrängung austretende Restgase in die rillenartige bzw. nutartige Ausnehmung 6a (siehe Fig. 8). Da sich die Ausnehmung 6a über den gesamten Umfang des Randbereichs B erstreckt, können sich in ihr die Restgase über den ganzen Umfang verteilen und ein Gaspolster 10 ausbilden. Somit ist eine praktisch vollständige Entgasung der gebildeten Schokoladenhülse gewährleistet, was zu einer deutlichen Verringerung der Gefahr einer Beschädigung der Hülse 1 nach dem Anheben des Stempels 4 führt. Des weiteren sind hier schematisch Kühl- bzw. Heizeinrichtungen in Form von Kanälen 9 zur Temperierung der Alveole 2 und des Stempels 4 dargestellt.

Fig. 8 ist eine vergrösserte Ansicht des in Fig. 6 oder in Fig. 7 gestrichelt eingekreisten Randbereichs B. Während der weiter oben geschilderten Verdrängungsphase bewegt sich die durch den gekühlten Stempel 4 zunehmend abgekühlte, aber noch fliessfähige Schokoladenmasse 1 (siehe Fig. 13-16) entlang der Alveolen-Innenfläche 3 und entlang der Stempel-Aussenfläche 5 bis in den Randbereich B nach oben, um schliesslich zu erstarren. Je nach der Grösse und der Elastizität des Dichtungsmittels 8 sowie in Abhängigkeit von dem Stempeldruck, insbesondere im untersten Bereich der Absenkbewegung des Stempels 4, kann der Gasdruck in dem ringförmigen Gasvolumen über dem Hülsenrand 1a aufgrund der austretenden Restgase unterschiedlich gross sein. Diese aus dem sich verfestigenden Hülsenrand 1 a austretenden und sich über die Ringnut 6a verteilenden, ein Gaspolster 10 ausbildenden, Restgase tragen bei ausreichend grossem Gasdruck zu einer Vergleichmässigung des sich verfestigenden Hülsenrandes 1a bei.

Die Figuren 9, 10, 11 und 12, die bis auf ein Merkmal jeweils den Figuren 5, 6, 7 und 8 entsprechen, zeigen eine zweite Ausführung eines Stempel/Alveolen-Paares der erfindungsgemässen Vorrichtung. Die der Alveolenfläche 2b zugewandte Fläche des Flansches 4b des Stempels 4 weist radial ausserhalb des Dichtungsmittels 8 starre Erhöhungen 12 auf, die entlang des Umfangs des Flansches 4b verteilt sind und als "Abstandshalter" dienen. Dadurch wird gewährleistet, dass unabhängig vom ausgeübten Stempeldruck sowie unabhängig von den anderen genannten Systemtoleranzen der Stempel 4 nur bis zu einer maximalen Tiefe in die Alveole 2 eintaucht. Dadurch erreicht man einerseits, dass die Hülse 1 an ihrer untersten Stelle nicht zu dünn wird, und andererseits, dass das für die Restgase zur Verfügung stehende Volumen der Ringnut 6a nicht zu klein oder gar Null wird, was zur Folge hätte, dass die Restgase aus der Hülse 1 nicht entweichen können.

Die Figuren 13, 14, 15 und 16 entsprechen im wesentlichen der Fig. 12. Zusätzlich ist hier aber noch der Hülsenrand 1 a der Schokoladenhülse 1 gezeigt, der sich zwischen der Alveolen-Innenfläche 3 und der Stempel-Aussenfläche 5 sowie unterhalb der Ringnut 6a des Formhohlraums 6 erstreckt.

Fig. 13 zeigt den Randbereich B der ersten Ausführung mit einem massiven O-Ring 81, der das Dichtungsmittel bildet. Das Verformungs- und Abdichtungsverhalten des Dichtungsmittels wird hier im wesentlichen allein durch die Elastizität des Dichtungsmaterials bestimmt.

Fig. 14 zeigt den Randbereich B einer dritten Ausführung mit einem hohlen O-Ring 82, der das Dichtungsmittel bildet. Das Verformungs- und Abdichtungsverhalten dieses Dichtungsmittels wird nicht nur durch die Elastizität des Dichtungsmaterials bestimmt, sondern kann auch massgeblich durch den Inhalt des Hohlraums 92 des O-Rings 82 bestimmt werden. Als Inhalt kommen kompressible oder inkompressible Fluide in Frage. So kann der Hohlraum 92 z.B. über (nicht dargestellte) Verbindungsleitungen an ein Pneumatik- oder ein Hydrauliksystem angeschlossen sein, bei dem der zeitliche Druckaufbau in dem Hohlraum 92 und somit die "Härte" des pneumatisch oder hydraulisch beaufschlagten hohlen O-Rings 82 mit dem zeitlichen Verlauf des Stempeldrucks beim Stempeln koordiniert wird. So kann z.B. eine zur Funktion der Erhöhungen bzw. der Abstandshalter 12 der zweiten Ausführung analoge Funktion dadurch erzielt werden, dass der Druck in dem Hohlraum 92 zeitgleich mit dem Eintreffen des Stempels an seiner untersten Stellung einen Maximalwert erreicht. Die Abstimmung der pneumatischen oder hydraulischen "Bremswirkung" mit dem Stempeldruck hängt vom Druck in dem Hohlraum 92 und von der Grösse des hohlen O-Rings 82 ab. Die Kopplung an ein Pneumatik- oder ein Hydrauliksystem ermöglicht auch den Eintrag einer Vibration in das Dichtungsmittel, was ebenfalls zur Vergleichmässigung des Hülsenrandes 1a beitragen kann.

Fig. 15 zeigt den Randbereich B einer vierten Ausführung, bei der ähnlich wie bei der Ausführung in Fig. 13 ein massiver O-Ring 83 verwendet wird, der allerdings ausreichend gross ist und näher bei der Ringnut 6a des Formhohlraums 6 als bei den bisherigen Ausführungen angeordnet ist. Dadurch wird ermöglicht, dass die sich im Formhohlraum 6 verteilende Schokoladenmasse 1 während des Stempelns mit dem massiven O-Ring 83 in Berührung kommt. Aufgrund seiner Elastizität trägt dieser massive O-Ring 83, ggf.. zusammen mit den in der Ringnut 6a gesammelten Restgasen (Gaspolster 10) zur Vergleichmässigung des Hülsenrandes 1a bei.

Fig. 16 zeigt den Randbereich B einer fünften Ausführung mit einem hohlen O-Ring 84 der das Dichtungsmittel bildet. Ähnlich wie bei der Ausführung von Fig. 14 wird auch hier das Verformungs- und Abdichtungsverhalten des Dichtungsmittels nicht nur durch die Elastizität des Dichtungsmaterials bestimmt, sondern kann auch massgeblich durch den Inhalt des Hohlraums 94 des O-Rings 84 bestimmt werden. Als Inhalt kommen wiederum kompressible oder inkompressible Fluide eines Pneumatik- bzw. Hydrauliksystems in Frage. Zusätzlich zu der pneumatisch oder hydraulisch unterstützten Abdichtung und Bremsung beim Kaltstempeln besteht hier die Möglichkeit, das Pneumatik- oder Hydraulikfluid im Hohlraum 94 als Wärmeträgerfluid zu verwenden. So kann z.B. durch Verwendung eines heissen Wärmeträgerfluids, wie z.B. heisses Wasser oder heisser Dampf, ein nochmaliges Aufschmelzen oder zumindest Erweichen des sich bildenden Hülsenrandes 1a erreicht werden, wodurch die Vergleichmässigung des Hülsenrandes 1a begünstigt wird.

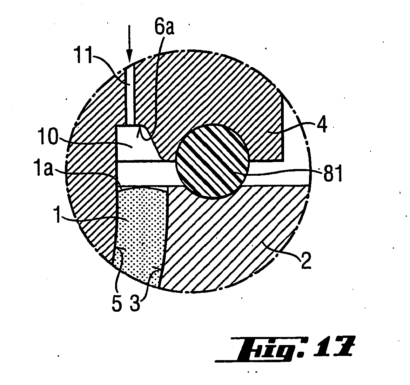

Fig. 17 zeigt den Randbereich B einer sechsten Ausführung mit einer zusätzlichen Druckleitung 11 zur Erzeugung eines veränderlichen Gaspolsters 10 im Bereich der Ringnut 6a.

Es können daher mehrere Elemente zur Vergleichmässigung des Hülsenrandes beitragen, und zwar insbesondere:
1) elastische Restgase in der Ringnut 6a (Fig. 13, 14, 15, 16);
2) elastischer O-Ring 83, der den Hülsenrand 1 a berührt (Fig. 15, 16);
3) geheizter O-Ring 84, der den Hülsenrand 1 a berührt (Fig. 16);
4) veränderlich elastischer oder vibrierter O-Ring (Fig. 14, 16).
5) veränderlicher Luftdruck des Gaspolsters 10 (Fig. 17).

Die hier anhand veranschaulichender Beispiele beschriebene Erfindung soll nicht auf diese Beispiele beschränkt sein. Sämtliche Abwandlungen oder analoge Ausführungen sind ebenfalls enthalten. So könnten z.B. die als Abstandshalter 12 dienenden Erhöhungen (Fig. 9-12) auch an der Alveole 2 angebracht sein.

### Bezugszeichen

- 1: Schale bzw. Hülse
- 1a: Schalenrand bzw. Hülsenrand
- 2: Alveole
- 2a: Alveolen-Randbereich
- 2b: Alveolenfläche
- 3: Innenfläche der Alveole
- 4: Stempel
- 4a: Stempel-Randbereich
- 4b: Flansch am Stempel
- 4c: Stempelschaft
- 4d: Stempelkopf
- 5: Aussenfläche des Stempels
- 6: Formhohlraum
- 6a: rillenartige bzw. nutartige Ausnehmung
- 8: Dichtungsmittel aus gummielastischem Material
- 9: Kühl-/Heizkanal
- 10: Gaspolster
- 11: Druckleitung
- 12: starre Erhöhungen, Abstandshalter
- 81: massiver O-Ring
- 82: hohler O-Ring, Hohlkörper
- 83: massiver O-Ring
- 84: hohler O-Ring, Hohlkörper
- 92: Hohlraum des O-Rings
- 94: Hohlraum des O-Rings
- A: Schnittebene
- B: Randbereich von Alveole, Stempel und Schale bzw. Hülse

## Patentansprüche

1. Vorrichtung zur Herstellung eines schalenartig geformten Verzehrgutes aus einer Fettmasse, insbesondere einer kakaohaltigen bzw. schokoladeartigen Fettmasse, mit
➢ einer Alveole (2), deren Innenfläche (3) die Aussenfläche des herzustellenden schalenartigen Verzehrgutes bestimmt;
➢ einem Dosiermittel zum Befüllen der Alveole (2) mit der Fettmasse im fliessfähigen temperierten Zustand;
➢ einem in die Alveole (2) absenkbaren, kühlbaren Stempel (4), dessen Aussenfläche (5) die Innenfläche des herzustellenden schalenartigen Verzehrgutes bestimmt;
➢ einem Absenkmittel zum Absenken des Stempels (4) in die Alveole (2);
➢ wobei bei in die Alveole (2) abgesenktem Stempel (4) ein Stempel-Randbereich (4a) des Stempels (4) und ein Alveolen-Randbereich (2a) der Alveole (2) derart aneinander liegen, dass der Stempel (4) und die Alveole (2) einen schalenartigen Formhohlraum (6) bestimmen, der durch die Stempel-Aussenfläche (5) und durch die Alveolen-Innenfläche (3) begrenzt ist;
wobei der Alveolen-Randbereich (2a) und/oder der Stempel-Randbereich (4a) ein elastisch verformbares Dichtungsmittel (8; 10) aufweist, welches den Formhohlraum (6) nach aussen abdichtet, wenn es bei in die Alveole (2) abgesenktem Stempel (4) gegen den Stempel-Randbereich (2a) bzw. gegen den Alveolen-Randbereich (4a) gedrückt wird,
**dadurch gekennzeichnet, dass** das Dichtungsmittel (8) als O-Ring (81) oder als verformbarer Hohlkörper (82) aus gummielastischem Material ausgebildet ist.

2. Vorrichtung nach Anspruch 1, **dadurch gekennzeichnet, dass** das Dichtungsmittel (8; 10) sich zumindest in Teilbereichen des Alveolen-Randbereichs (2a) bzw. des Stempel-Randbereichs (4a) entlang der Umfangsrichtung der Alveolenöffnung bzw. des Stempelumfangs erstreckt.

3. Vorrichtung nach Anspruch 1 oder 2, **dadurch gekennzeichnet, dass** das Dichtungsmittel (8; 10) sich entlang des gesamten Umfangs des Alveolen-Randbereichs bzw. des Stempel-Randbereichs ringartig erstreckt.

4. Vorrichtung nach einem der vorhergehenden Ansprüche, **dadurch gekennzeichnet, dass** der Stempel-Randbereich (4a) eine bei vollständig abgesenktem Stempel (4) auf dem Alveolen-Randbereich (2a) anliegende Auflagefläche einer flanschartigen Erweiterung (4b) des Stempels (4) ist.

5. Vorrichtung nach einem der vorhergehenden Ansprüche, **dadurch gekennzeichnet, dass** zwischen dem Stempel-Randbereich (4a) und dem Dichtungsmittel (8) bzw. zwischen dem Alveolen-Randbereich (2a) und dem Dichtungsmittel (8) eine kraftschlüssige Verbindung besteht.

6. Vorrichtung nach einem der vorhergehenden Ansprüche, **dadurch gekennzeichnet, dass** zwischen dem Stempel-Randbereich (4a) und dem Dichtungsmittel (8) bzw. zwischen dem Alveolen-Randbereich (2a) und dem Dichtungsmittel (8) eine formschlüssige Verbindung besteht.

7. Vorrichtung nach einem der vorhergehenden Ansprüche, **dadurch gekennzeichnet, dass** das Dichtmittel als Hohlkörper ausgebildet ist und dass der Hohlkörper (82) torusartig geformt ist.

8. Vorrichtung nach einem der vorhergehenden Ansprüche, **dadurch gekennzeichnet, dass** das Dichtmittel als Hohlkörper ausgebildet ist und dass der Hohlkörper (82) mit einem Fluid gefüllt ist.

9. Vorrichtung nach einem der Ansprüche1 bis 7, **dadurch gekennzeichnet, dass** das Dichtmittel als Hohlkörper ausgebildet ist und dass der Hohlkörper (82) über mindestens eine Fluidleitung mit einer Fluidquelle in Fluidverbindung steht.

10. Vorrichtung nach Anspruch 8 oder 9, **dadurch gekennzeichnet, dass** das Fluid ein inkompressibles Fluid, insbesondere eine Flüssigkeit wie Wasser ist.

11. Vorrichtung nach Anspruch 8 oder 9, **dadurch gekennzeichnet, dass** das Fluid ein kompressibles Fluid, insbesondere ein Gas wie Luft, ist.

12. Vorrichtung nach einem der Ansprüche 8 bis 11, **dadurch gekennzeichnet, dass** das Fluid ein Wärmeträgerfluid aufweist.

13. Vorrichtung nach einem der Ansprüche 8 bis 12, **dadurch gekennzeichnet, dass** das Fluid in dem Hohlkörper sowohl ein kompressibles Fluid als auch ein inkompressibles Fluid enthält.

14. Vorrichtung nach einem der vorhergehenden Ansprüche, **dadurch gekennzeichnet, dass** das Dichtungsmittel (8; 81; 82) in einem nutartigen Sitz des Alveolen-Randbereichs (2a) bzw. des Stempel-Randbereichs (4a) überstehend eingesetzt ist.

15. Vorrichtung nach einem der vorhergehenden Ansprüche, **dadurch gekennzeichnet, dass** zumindest Teilbereiche entlang der Umfangsrichtung des Alveolen-Randbereichs (2a) und/oder des Stempel-Randbereichs (4a) nutartige oder rillenartige Ausnehmungen aufweisen.

16. Vorrichtung nach einem der vorhergehenden Ansprüche, **dadurch gekennzeichnet, dass** der Stempel (4) und/oder die Alveole (2) aus einem gut wärmeleitenden Material bestehen.

17. Vorrichtung nach einem der vorhergehenden Ansprüche, **dadurch gekennzeichnet, dass** der Stempel (4) und/oder die Alveole (2) von Kanälen (9) durchzogen sind, die mit einer Wärmeträgerfluidquelle in Fluidverbindung stehen.

18. Vorrichtung nach Anspruch 17, **dadurch gekennzeichnet, dass** die Wärmeträgerfluidquelle eine Kühlfluidquelle ist.

19. Vorrichtung nach einem der vorhergehenden Ansprüche, **dadurch gekennzeichnet, dass** der Alveolen-Randbereich (2a) und/oder der Stempel-Randbereich (4a) starre Erhöhungen (12) aufweisen.

20. Vorrichtung nach einem der vorhergehenden Ansprüche, **dadurch gekennzeichnet, dass** das Dichtungsmittel (8; 10) eine Dichtungsbarriere zwischen dem Formhohlraum (6) und der äusseren Umgebung der Vorrichtung bildet.

21. Vorrichtung nach Anspruch 20, **dadurch gekennzeichnet, dass** die Verformung des Dichtungsmittels (8, 10) bei Überschreitung eines auf das Dichtungsmittel einwirkenden Verformungs-Minimaldrucks einsetzt und die Überwindung der Dichtungsbarriere des Dichtungsmittels bei Überschreitung eines auf das Dichtungsmittel (8, 10) einwirkenden Überwindungs-Minimaldrucks einsetzt.

22. Verfahren zur Herstellung eines schalenartig geformten Verzehrgutes aus einer Fettmasse, insbesondere einer kakaohaltigen bzw. schokoladeartigen Fettmasse, wobei eine Vorrichtung gemäss zumindest einem der Ansprüche 1 bis 21 verwendet wird, wobei das Verfahren die folgenden Schritte aufweist:
➢ dosiertes Befüllen einer die Aussenfläche des schalenartigen Verzehrgutes bestimmenden Alveole mit der Fettmasse im fliessfähigen temperierten Zustand;
➢ Eintauchen eines die Innenfläche des schalenartigen Verzehrgutes bestimmenden, gekühlten Stempels in die fliessfähige temperierte Fettmasse in der Alveole, so dass sich die noch fliessfähige Fettmasse in dem die Form und das Soll-Volumen, d.h. Volumen bei maximaler Eindringtiefe und unverformtem Dichtungsmittel, des Verzehrgutes bestimmenden Zwischenraum zwischen Alveole und Stempel verteilt;
➢ Halten des Stempels in seiner in der Fettmasse eingetauchten Stellung über eine bestimmte Zeitdauer, bis die Fettmasse in dem Zwischenraum erstarrt ist;
**dadurch gekennzeichnet, dass** beim Eintauchen des Stempels in die fliessfähige temperierte Fettmasse in der Alveole ein Druckpolster im Alveolen-Randbereich und/oder im Stempel-Randbereich erzeugt wird.

23. Verfahren nach Anspruch 22, **dadurch gekennzeichnet, dass** das Eintauchen des Stempels in die Fettmasse mit einem vorgegebenen zeitlichen Verlauf der Stempelkraft bzw. des Stempeldrucks in der Fettmasse im Zwischenraum gesteuert wird.

24. Verfahren nach Anspruch 22, **dadurch gekennzeichnet, dass** das Eintauchen des Stempels in die Fettmasse mit einem vorgegebenen zeitlichen Verlauf der Geschwindigkeit des Stempels in der Fettmasse im Zwischenraum gesteuert wird.

25. Verfahren nach Anspruch 22, **dadurch gekennzeichnet, dass** das Eintauchen des Stempels in die Fettmasse mit einem vorgegebenen Verlauf der Stempelkraft bzw. des Stempeldrucks in Abhängigkeit von der Eindringtiefe des Stempels in der Fettmasse im Zwischenraum gesteuert wird.

26. Verfahren nach Anspruch 22, **dadurch gekennzeichnet, dass** während des Eintauchens des Stempels in die Fettmasse der Verlauf der Stempelkraft bzw. des Stempeldrucks geregelt wird.

27. Verfahren nach Anspruch 22, **dadurch gekennzeichnet, dass** während des Eintauchens des Stempels in die Fettmasse die Geschwindigkeit des Stempels geregelt wird.

28. Verfahren nach einem der Ansprüche 22 bis 27, **dadurch gekennzeichnet, dass** das Befüllen der Alveole mit Fettmasse mit einem geringen Fettmasse-Überschuss gegenüber dem Soll-Volumen erfolgt.

29. Verfahren nach einem der Ansprüche 22 bis 28, **dadurch gekennzeichnet, dass** die mit Fettmasse befüllte Alveole vor dem Eintauchen des Stempels vibriert wird.

30. Verfahren nach einem der Ansprüche 22 bis 29, **dadurch gekennzeichnet, dass** der beim Eintauchen des Stempels in der fliessfähigen Fettmasse herrschende Stempeldruck zumindest am Ende der Eintauchbewegung des Stempels grösser als der zur Verformung des Dichtungsmittels notwendige Verformungs-Minimaldruck und kleiner als der zur Überwindung der Dichtungsbarriere notwendige Überwindungs-Minimaldruck ist.

31. Verfahren nach einem der Ansprüche 22 bis 30, **dadurch gekennzeichnet, dass** das Dichtmittel als Hohlkörper ausgebildet ist und dass während des Eintauchens des Stempels der Fluiddruck im Innern des Dichtungs-Hohlkörpers bzw. der Gasdruck des Gaspolsters zeitlich verändert wird.

32. Verfahren nach einem der Ansprüche 22 bis 31, **dadurch gekennzeichnet, dass** im Verlaufe des Eintauchens des Stempels in die fliessfähige temperierte Fettmasse in der Alveole die Stempelkraft bzw. der Stempeldruck in der Fettmasse im Zwischenraum zunehmend erhöht wird.

33. Verfahren nach einem der Ansprüche 23 bis 32, **dadurch gekennzeichnet, dass** im Verlaufe des Eintauchens des Stempels in die fliessfähige temperierte Fettmasse in der Alveole die Stempelkraft bzw. der Stempeldruck in der Fettmasse im Zwischenraum einen oszillierenden zeitlichen Verlauf aufweist.

34. Verfahren nach einem der Ansprüche 22 bis 33, **dadurch gekennzeichnet, dass** der eindosierte Fettmasse-Überschuss grösser als die Dosiermengen-Toleranz des Soll-Volumens ist.

35. Verfahren nach einem der Ansprüche 22 bis 34, **dadurch gekennzeichnet, dass** der Stempel und/oder die Alveole mit einem Kühlfluid gekühlt wird.

36. Verfahren nach einem der Ansprüche 22 bis 35, **dadurch gekennzeichnet, dass** das Dichtungsmittel mittels eines Kühlfluids gekühlt wird.

37. Verfahren nach einem der Ansprüche 22 bis 35, **dadurch gekennzeichnet, dass** das Dichtungsmittel mittels eines Heizfluids geheizt wird.

38. Verfahren nach einem der Ansprüche 22 bis 37, **dadurch gekennzeichnet, dass** zumindest gegen Ende des Eintauchens des Stempels der Fluiddruck im Innern des Dichtungs-Hohlkörpers bzw. der Gasdruck des Gaspolsters oszilliert wird.

## Claims

1. A device for manufacturing a husk-shaped consumable out of a fatty substance, in particular a cocoa-containing or chocolate-like fatty substance, with
- an alveolus (2) whose inner surface (3) determines the outer surface of the husk-shaped consumable to be manufactured;
- a metering means for filling the alveolus (2) with the fatty substance in a pourable, tempered state;
- a coolable stamp (4) that can be lowered into the alveolus (2), and whose outer surface (5) determines the inner surface of the husk-shaped consumable to be manufactured;
- a lowering means for lowering the stamp (4) into the alveolus (2);
- wherein, with the stamp (4) lowered into the alveolus (2), a stamp edge area (4a) of the stamp (4) and an alveolus edge area (2a) of the alveolus (2) abut each other in such a way that the stamp (4) and alveolus (2) determine a husk-shaped mold cavity (6), which is bordered by the stamp outer surface (5) and alveolus inner surface (3);
wherein the alveolus edge area (2a) and/or stamp edge area (4a) exhibits an elastically deformable sealant (8; 10), which seals the mold cavity (6) to the outside when it is pressed against the stamp edge area (2a) or alveolus edge area (4a) with the stamp (4) lowered in the alveolus (2),
**characterized in that** the sealant (8) is designed as an O-ring (81) or deformable hollow item (82) made of a rubber-elastic material.

2. The device according to claim 1, **characterized in that** the sealant (8; 10) extends along the circumferential direction of the alveolus opening or stamp circumference at least in partial areas of the alveolus edge area (2a) or stamp edge area (4a).

3. The device according to claim 1 or 2, **characterized in that** the sealant (8; 10) extends annularly along the entire circumference of the alveolus edge area or stamp edge area.

4. The device according to one of the preceding claims, **characterized in that** the stamp edge area (4a) is a contact surface of a flange-like expansion (4b) of the stamp (4) abutting the alveolus edge area (2a) given a completely lowered stamp (4).

5. The device according to one of the preceding claims, **characterized in that** there is a non-positive connection between the stamp edge area (4a) and the sealant (8) or between the alveolus edge area (2a) and the sealant (8).

6. The device according to one of the preceding claims, **characterized in that** there is a positive connection between the stamp edge area (4a) and the sealant (8) or between the alveolus edge area (2a) and the sealant (8).

7. The device according to one of the preceding claims, **characterized in that** the sealant is designed as a hollow item, and that the hollow item (82) is toroidal.

8. The device according to one of the preceding claims, **characterized in that** the sealant is designed as a hollow item, and that the hollow item (82) is filled with a fluid.

9. The device according to one of claims 1 to 7, **characterized in that** the sealant is designed as a hollow item, and that the hollow item (82) is fluidically connected with a fluid source by at least one fluid line.

10. The device according to claim 8 or 9, **characterized in that** the fluid is an incompressible fluid, in particular a liquid such as water.

11. The device according to claim 8 or 9, **characterized in that** the fluid is a compressible fluid, in particular a gas such as air.

12. The device according to one of claims 8 to 11, **characterized in that** the fluid exhibits a heat carrier fluid.

13. The device according to one of claims 8 to 12, **characterized in that** the fluid in the hollow item contains both a compressible fluid and an incompressible fluid.

14. The device according to one of the preceding claims, **characterized in that** the sealant (8; 81; 82) is placed in a grooved seat projecting over the alveolus edge area (2a) or stamp edge area (4a).

15. The device according to one of the preceding claims, **characterized in that** at least partial areas exhibit grooved or fluted recesses along the circumferential direction of the alveolus edge area (2a) and/or stamp edge area (4a).

16. The device according to one of the preceding claims, **characterized in that** the stamp (4) and/or alveolus (2) consist of a readily heat conducting material.

17. The device according to one of the preceding claims, **characterized in that** the stamp (4) and/or alveolus (2) are traversed by channels (9) fluidically connected with a heat carrier fluid source.

18. The device according to claim 17, **characterized in that** the heat carrier fluid source is a cooling fluid source.

19. The device according to one of the preceding claims, **characterized in that** the alveolus edge area (2a) and/or stamp edge area (4a) exhibit rigid elevations (12).

20. The device according to one of the preceding claims, **characterized in that** the sealant (8; 10) forms a sealing barrier between the mold cavity (6) and the outside environment of the device.

21. The device according to claim 20, **characterized in that** the sealant (8, 10) starts to deform when a minimal deformation pressure acting on the sealant is exceeded, and the sealing barrier of the sealant is overcome when a minimal overcoming pressure acting on the sealant (8, 10) is exceeded.

22. A method for manufacturing a husk-shaped consumable out of a fatty substance, in particular a cocoa-containing or chocolate-like fatty substance, wherein a device according to at least one of claims 1 to 21 is used, wherein the method involves the following steps:
- Metered filling of an alveolus determining the outer surface of the husk-shaped consumable with the fatty substance in a pourable, tempered state;
- Immersion of a cooled stamp that determines the inner surface of the husk-shaped consumable into the pourable, tempered fatty substance in the alveolus, so that the still pourable fatty substance is distributed in the gap between the alveolus and stamp that determines the shape and desired volume (=volume at maximum penetration depth and non-deformed sealant) of the consumable;
- Retention of the stamp immersed in the fatty substance for a specific period of time until the fatty substance in the gap has hardened;
**characterized in that** a pressure cushion is generated in the alveolus edge area and/or stamp edge area while immersing the stamp into the pourable, tempered fatty substance in the alveolus.

23. The method according to claim 22, **characterized in that** the immersion of the stamp into the fatty substance is controlled using a prescribed chronological progression of stamp force or stamp pressure in the fatty substance in the gap.

24. The method according to claim 22, **characterized in that** the immersion of the stamp into the fatty substance is controlled using a prescribed chronological progression of stamp velocity in the fatty substance in the gap.

25. The method according to claim 22, **characterized in that** the immersion of the stamp into the fatty substance is controlled using a prescribed progression of stamp force or stamp pressure as a function of the stamp penetration depth in the fatty substance in the gap.

26. The method according to claim 22, **characterized in that** the progression of stamp force or stamp pressure is regulated during immersion of the stamp into the fatty substance.

27. The method according to claim 22, **characterized in that** the velocity of the stamp is regulated during immersion of the stamp into the fatty substance.

28. The method according to one of claims 22 to 27, **characterized in that** the alveolus is filled with fatty substance using a slight excess of fatty substance relative to the desired volume.

29. The method according to one of claims 22 to 28, **characterized in that** the alveolus filled with fatty substance is vibrated before the stamp is immersed.

30. The method according to one of claims 22 to 29, **characterized in that** the stamp pressure that prevails during the immersion of the stamp into the pourable fatty acid is greater than the minimum deformation pressure required for deforming the sealant and less than the minimum overcoming pressure required for overcoming the sealing barrier, at least at the end of the immersion motion by the stamp.

31. The method according to one of claims 22 to 30, **characterized in that** the sealant is designed as a hollow item, and that the fluid pressure inside the sealant hollow item or the gas pressure of the gas cushion is chronologically varied during the immersion of the stamp.

32. The method according to one of claims 22 to 31, **characterized in that** the stamp force or stamp pressure in the fatty substance is incrementally increased in the gap during the course of immersion of the stamp into the pourable, temperature-controlled fatty substance in the alveolus.

33. The method according to one of claims 22 to 32, **characterized in that** the stamp force or stamp pressure in the fatty substance exhibits an oscillating chronological progression in the gap during the course of immersion of the stamp into the pourable, temperature-controlled fatty substance in the alveolus.

34. The method according to one of claims 22 to 33, **characterized in that** the injected excess fatty substance is greater than the metering quantity tolerance of the desired volume.

35. The method according to one of claims 22 to 34, **characterized in that** the stamp and/or alveolus is cooled with a cooling fluid.

36. The method according to one of claims 22 to 35, **characterized in that** the sealant is cooled with a cooling fluid.

37. The method according to one of claims 22 to 35, **characterized in that** the sealant is heated with a heating fluid.

38. The method according to one of claims 22 to 37,
**characterized in that** the fluid pressure inside the sealant hollow item or gas pressure of the gas cushion is oscillated at least toward the end of the stamp immersion.

## Revendications

1. Dispositif de production d'un produit alimentaire en forme de coquille à partir d'une masse de matière grasse, notamment d'une masse de matière grasse contenant du cacao ou de type chocolat, comportant
- une alvéole (2), dont la surface intérieure (3) détermine la surface extérieure du produit alimentaire en forme de coquille à produire,
- un moyen de dosage pour remplir l'alvéole (2) avec la masse de matière grasse en état tempéré liquide ;
- un tampon (4) pouvant être refroidi et abaissé dans l'alvéole (2), dont la surface extérieure (5) détermine la surface intérieure du produit alimentaire en forme de coquille à produire ;
- un moyen d'abaissement pour abaisser le tampon (4) dans l'alvéole (2) ;
- dans lequel quand le tampon (4) est abaissé dans l'alvéole (2), une zone de bord de tampon (4a) du tampon (4) et une zone de bord d'alvéole (2a) de l'alvéole (2) se superposent de telle sorte que le tampon (4) et l'alvéole (2) déterminent un espace creux de moule (6) en forme de coquille, qui est déterminé par la surface extérieure de tampon (5) et par la surface intérieur d'alvéole (3) ;
dans lequel la zone de bord d'alvéole (2a) et/ou la zone de bord de tampon (4a) présente un moyen d'étanchéité (8 ;10) déformable élastiquement, qui isole de manière étanche vers l'extérieur l'espace creux de moule (6), quand il est pressé par le tampon (4) abaissé dans l'alvéole (2) contre la zone de bord de tampon (2a), respectivement contre la zone de bord d'alvéole (4a),
**caractérisé en ce que** le moyen d'étanchéité (8) est configuré comme un joint torique (81) ou comme un corps creux déformable (82) en matériau élastique gommeux.

2. Dispositif selon la revendication 1, **caractérisé en ce que** le moyen d'étanchéité (8,10) s'étend au moins dans des zones partielles de la zone de bord d'alvéole (2a), respectivement de la zone de bord de tampon (4a) le long de la direction périphérique de l'ouverture d'alvéole, respectivement de la périphérie du tampon.

3. Dispositif selon la revendication 1 ou 2, **caractérisé en ce que** le moyen d'étanchéité (8 ;10) s'étend le long de la périphérie totale de la zone de bord d'alvéole, respectivement de la zone de bord de tampon en forme d'anneau.

4. Dispositif selon une des revendications précédentes, **caractérisé en ce que** la zone de bord de tampon (4a) est une surface d'appui d'un élargissement (4b) en forme de bride du tampon (4) reposant sur la zone de bord d'alvéole (2a) quand le tampon (4) est complètement abaissé.

5. Dispositif selon une des revendications précédentes, **caractérisé en ce que** entre la zone de bord de tampon (4a) et le moyen d'étanchéité (8), respectivement entre la zone de bord d'alvéole (2a) et le moyen d'étanchéité (8), une liaison par conjonction de force est instaurée.

6. Dispositif selon une des revendications précédentes, **caractérisé en ce que** entre la zone de bord de tampon (4a) et le moyen d'étanchéité (8), respectivement entre la zone de bord d'alvéole (2a) et le moyen d'étanchéité (8), une liaison par conjonction de forme est instaurée.

7. Dispositif selon une des revendications précédentes, **caractérisé en ce que** le moyen d'étanchéité est configuré comme un corps creux et le corps creux (82) a une forme de tore.

8. Dispositif selon une des revendications précédentes, **caractérisé en ce que** le moyen d'étanchéité est configuré comme un corps creux (82) et est rempli d'un fluide.

9. Dispositif selon une des revendications 1 à 7, **caractérisé en ce que** le moyen d'étanchéité est configuré comme un corps creux (82) et le corps creux (82) est en liaison via au moins une conduite de fluide avec une source de fluide.

10. Dispositif selon la revendication 8 ou 9, **caractérisé en ce que** le fluide est un fluide incompressible, notamment un liquide comme de l'eau.

11. Dispositif selon la revendication 8 ou 9, **caractérisé en ce que** le fluide est un fluide compressible, notamment un gaz comme de l'air.

12. Dispositif selon une des revendications 8 à 11, **caractérisé en ce que** le fluide présente un fluide caloporteur.

13. Dispositif selon une des revendications 8 à 12, **caractérisé en ce que** le fluide dans le corps creux contient tant un fluide compressible qu'un fluide incompressible.

14. Dispositif selon une des revendications précédentes, **caractérisé en ce que** le moyen d'étanchéité (8 ;81 ;82) est inséré dans un siège en forme de rainure en surplomb de la zone de bord d'alvéole (2a), respectivement de la zone de bord de tampon (4a).

15. dispositif selon une des revendications précédentes, **caractérisé en ce que** au moins des zones partielles le long de la direction périphérique de la zone de bord d'alvéole (2a) et/ou de la zone de bord de tampon (4a) présentent des évidements en forme de rainure ou de strie.

16. Dispositif selon une des revendications précédentes, **caractérisé en ce que** le tampon (4) et/ou l'alvéole (2) sont constitués d'un matériau à bonne conduction thermique.

17. Dispositif selon une des revendications précédentes, **caractérisé en ce que** le tampon (4) et/ou l'alvéole 2) sont traversés par des canaux, qui sont en liaison fluide avec une source de fluide caloporteur.

18. Dispositif selon la revendication 17, **caractérisé en ce que** la source de fluide caloporteur est une source de fluide de refroidissement.

19. Dispositif selon une des revendications précédentes, **caractérisé en ce que** la zone de bord d'alvéole (2a) et/ou la zone de bord de tampon (4a) présentent des élévations rigides (12).

20. Dispositif selon une des revendications précédentes, **caractérisé en ce que** le moyen d'étanchéité (8,10) forme une barrière d'étanchéité entre l'espace creux de moule (6) et l'environnement extérieur du dispositif.

21. Dispositif selon la revendication 20, **caractérisé en ce que** la déformation du moyen d'étanchéité (8,10) s'exerce quand une pression minimale de déformation agissant sur le moyen d'étanchéité est dépassée et le dépassement de la barrière d'étanchéité s'exerce quand une pression minimale de dépassement agissant sur le moyen d'étanchéité (8,10) est dépassée.

22. Procédé de production d'un produit alimentaire en forme de coquille à partir d'une masse de matière grasse, notamment d'une masse de matière grasse contenant du cacao ou de type chocolat, dans lequel un dispositif selon au moins une des revendications 1 à 21 est utilisé, dans lequel le procédé présente les étapes suivantes :
- remplissage dosé d'une alvéole déterminant la surface extérieure du produit alimentaire en forme de coquille avec la masse de matière grasse en état tempéré liquide ;
- abaissement d'un tampon refroidi, déterminant la surface intérieure du produit alimentaire en forme de coquille dans la masse de matière grasse tempérée liquide dans l'alvéole, de telle sorte que la masse de matière grasse encore liquide se répartisse entre l'alvéole et le tampon dans l'espace intermédiaire déterminant la forme et le volume de consigne, à savoir à une profondeur de pénétration maximale et en l'absence de déformation du moyen d'étanchéité, du produit alimentaire ;
- maintien du tampon dans sa position abaissée dans la masse de matière grasse sur une durée temporelle déterminée, jusqu'à ce que la masse de matière grasse soit solidifiée dans l'espace intermédiaire,
**caractérisé en ce que** quand le tampon est abaissé dans la masse de matière grasse tempérée liquide dans l'alvéole, un coussin pressurisé est produit dans la zone de bord de l'alvéole et/ou dans la zone de bord du tampon.

23. Procédé selon la revendication 22, **caractérisé en ce que** l'abaissement du tampon dans la masse de matière grasse est commandée avec un cours temporel prescrit de la force de tampon, respectivement de la pression du tampon dans la masse de matière grasse dans l'espace intermédiaire.

24. Procédé selon la revendication 22, **caractérisé en ce que** l'abaissement du tampon dans la masse de matière grasse est commandée avec un cours temporel prescrit de la vitesse du tampon dans la masse de matière grasse dans l'espace intermédiaire.

25. Procédé selon la revendication 22, **caractérisé en ce que** l'abaissement du tampon dans la masse de matière grasse est commandée avec un cours temporel prescrit de force de tamponnage, respectivement de pression de tamponnage en fonction de la profondeur de pénétration du tampon dans la masse de matière grasse dans l'espace intermédiaire.

26. Procédé selon la revendication 22, **caractérisé en ce que** pendant l'abaissement du tampon dans la masse de matière grasse, le cours de la force de tamponnage, respectivement de la pression de tamponnage est régulé.

27. Procédé selon la revendication 22, **caractérisé en ce que** pendant l'abaissement du tampon dans la masse de matière grasse, la vitesse du tampon est régulée.

28. Procédé selon une des revendications 22 à 27, **caractérisé en ce que** le remplissage de l'alvéole avec la masse de matière grasse s'effectue avec un surplus moindre de masse de matière grasse par rapport au volume de consigne.

29. Procédé selon une des revendications 22 à 28, **caractérisé en ce que** l'alvéole remplie de la masse de matière grasse est agitée avant l'abaissement du tampon.

30. Procédé selon une des revendications 22 à 29, **caractérisé en ce que** quand le tampon est abaissé dans la masse de matière grasse liquide, la pression de tamponnage au moins ou terme du mouvement d'abraissement du tampon est plus grande que la pression minimale de déformation requise pour la déformation du moyen d'étanchéité et plus petite que la pression minimale de dépassement requise pour surmonter la barrière d'étanchéité.

31. Procédé selon une des revendications 22 à 30, **caractérisé en ce que** pendant l'abaissement du tampon, la pression de fluide à l'intérieur du corps creux d'étanchéité, respectivement la pression de gaz du coussin de gaz est variée temporellement.

32. Procédé selon une des revendications 22 à 31, **caractérisé en ce que** au cours de l'abaissement du tampon dans la masse de matière grasse tempérée liquide dans l'alvéole, la force de tamponnage, respectivement la pression de tamponnage dans la masse de matière grasse dans l'espace intermédiaire est augmentée progressivement.

33. Procédé selon une des revendications 23 à 32, **caractérisé en ce que** au cours de l'abaissement du tampon dans la masse de matière grasse tempérée liquide dans l'alvéole, la force de tamponnage, respectivement la pression de tamponnage dans la masse de matière grasse dans l'espace intermédiaire présente un cours temporel oscillant.

34. Procédé selon une des revendications 22 à 33, **caractérisé en ce que** le surplus de masse de matière grasse dosé est plus grand que la tolérance de quantités de dosage du volume de consigne.

35. Procédé selon une des revendications 22 à 34, **caractérisé en ce que** le tampon et/ou l'alvéole est refroidi avec un fluide de refroidissement.

36. Procédé selon une des revendications 22 à 35, **caractérisé en ce que** le moyen d'étanchéité est refroidi au moyen d'un fluide de refroidissement.

37. Procédé selon une des revendications 22 à 35, **caractérisé en ce que** le moyen d'étanchéité es chauffé au moyen d'un fluide de chauffage.

38. Procédé selon une des revendications 22 à 37, **caractérisé en ce que** au moins près de la fin de l'abaissement du tampon, la pression de fluide à l'intérieur du corps creux d'étanchéité, respectivement la pression de gaz du coussin de gaz est oscillée.
